(19)

Europäisches
Patentamt

European
Patent Office

Office européen
des brevets

(11) **EP 4 216 161 A1**

(12) **EUROPEAN PATENT APPLICATION**

(43) Date of publication:
**26.07.2023 Bulletin 2023/30**

(21) Application number: **22153009.0**

(22) Date of filing: **24.01.2022**

(51) International Patent Classification (IPC):
**G06T 7/194** (2017.01)

(52) Cooperative Patent Classification (CPC):
**G06T 7/194;** G06T 2207/20016

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Leica Microsystems CMS GmbH
35578 Wetzlar (DE)**

(72) Inventors:
• **WALTER, Kai**
**35578 Wetzlar (DE)**
• **FRIEDRICH, Lars**
**35578 Wetzlar (DE)**
• **ZIESCHE, Florian**
**35578 Wetzlar (DE)**

(74) Representative: **Grünecker Patent- und
Rechtsanwälte
PartG mbB
Leopoldstraße 4
80802 München (DE)**

(54) **APPARATUS, METHOD AND MACHINE LEARNING PRODUCT FOR COMPUTING A BASELINE ESTIMATE**

(57)    The invention relates to a digital image processing apparatus (100) for computing a baseline estimate (102) of a digital input image (104), wherein the digital image processing apparatus (100) is configured to obtain a digital intermediate image (106) by downsampling the digital input image (104) by a predetermined downsampling factor (108) and to compute the baseline estimate (102) based on the digital intermediate image (106). Further, the invention relates to a microscope (120) with such a digital image processing apparatus (100). The invention also relates to a computer-implemented image processing method, a computer program product (126) and a computer-readable medium (132). Lastly, the invention relates to a machine learning product (134) for processing a digital input image (104) and a method of training such a machine learning product (134).

FIG. 1

EP 4 216 161 A1

**Description**

The invention relates to a digital image processing apparatus for computing a baseline estimate of a digital input image. Further, the invention relates to an observation device, in particular to a medical observation device, such as a microscope with such a digital image processing apparatus. The invention also relates to a computer-implemented image processing method for computing a baseline estimate of a digital input image. Further, the invention relates to a computer program product and a computer-readable medium. Lastly, the invention relates to a machine learning product for processing a digital input image and a method of training such a machine learning product.

When digital images of objects are recorded through an optical device, such as a camera or a microscope, they often comprise in-focus components and out-of-focus components. That is to say, the features of the recorded object that are in the focal region of the optical device at the time of recording, are rendered sharply in the digital image (i.e. the in-focus component), while the remaining object features outside of the focal region appear as blurred background of the digital image (i.e. the out-of-focus component). Conversely, in some digital images, the content of interest may be present in the background, while being overlaid with image noise for example. In both scenarios, an estimation of the background is useful during image processing, be it for merely evaluating image quality or actively enhancing it.

For image processing in the field of medicine and other scientific disciplines, the available computation time and/or equipment performance (especially regarding memory and memory bandwidth) are often constraints.

It is thus an object of the present invention to provide an accelerated background estimation, which only requires low memory and low memory bandwidth.

This object is achieved by a digital image processing apparatus for computing a baseline estimate of a digital input image, wherein the digital image processing apparatus is configured to obtain a digital intermediate image by downsampling the digital input image by at least one predetermined downsampling factor and to compute the baseline estimate based on the digital intermediate image.

This apparatus is advantageous and achieves the above object for the following reasons:
As will be described below in further detail, the baseline estimate computed from the digital intermediate image can be considered as primarily representing an approximation of the background of the digital intermediate image. After all, said baseline estimate is computed based on the digital intermediate image. However, for numerous applications, said baseline estimate is also sufficiently representative for the background of the digital input image and thus can be considered equivalent to a baseline estimate of the digital input image.

Downsampling the digital input image to the digital intermediate image has little to no impact on the qualitative accuracy of the resulting baseline estimate. In other words, the baseline estimate computed from the digital intermediate image and a comparative baseline estimate computed directly from the digital input image are substantially geometrically similar. Thus, both adequately allow at least some qualitative evaluations of the background of the full-size digital input image (i.e. the digital input image in full-resolution).

Consequently, the apparatus is suited for (certain) background estimation purposes. At the same time, the amount of memory usage and bandwidth consumption is significantly reduced during image processing, when the baseline estimate is computed from the downsampled digital input image, instead of the full-size digital input image. Further, in comparison to computing the baseline estimate directly from the digital input image, the computational burden and computation time are reduced due to the prior downsampling. The above apparatus thus provides accelerated background estimation, while requiring less memory and less memory bandwidth.

The digital input image may be for example a one-dimensional, two-dimensional or three-dimensional image or an image of higher dimensionality. In particular, the digital input image may derive from a line scan camera, an area scan camera, a range camera, a stereo camera, a microscope camera, an endoscope camera or the like. The digital input image may comprise input image data at a number of input image locations, such as pixels or voxels. The digital intermediate image may likewise comprise intermediate image data at a number of intermediate image locations, such as pixels or voxels. The input image data and the intermediate image data may be discrete intensity data and/or discrete color data for example.

The input image data are preferably represented by an N-dimensional array $I(X_i)$, where $N$ is an integer equal to or larger than 1. Likewise, the intermediate image data are represented by an $n$-dimensional array $I_d(x_i)$, where $n$ is an integer equal to or larger than 1. Preferably $N$ and $n$ are equal.

$I(X_i)$ and $I_d(x_i)$ can be any value or combination of values at the location $X_i$ or $x_i$, respectively, such as a value representing an intensity of a color or "channel" in a color space, e.g. the intensity of the color R in RGB space, or a combined intensity of more than one color, e.g. $\frac{R+G+B}{3}$ in RGB color space.

The term $X_i$ is a shortcut notation for a tuple $\{X_1;...; X_M\}$ containing $M$ location values and representing a discrete location $X_i$ - or the position vector to that location - in the array representing the input image data. The location $X_i$ may be represented by a pixel or a preferably coherent set of pixels in the input image data. The discrete location $X_i$ denotes

e.g. a location variable $\{X_1\}$ in the case of one-dimensional input image data, a pair of discrete location variables $\{X_1; X_2\}$ in the case of two-dimensional input image data and a triplet of discrete location variables $\{X_1; X_2; X_3\}$ in the case of three-dimensional input image data. In the i-th dimension, the array may contain $M_i$ locations, i.e. $X_i = \{X_{i,1}, ..., X_{i,M_i}\}$. In total, $I(X_i)$ may contain $(M_1 \times ... \times M_N)$ elements. In the following, no reference will be made to a concrete location or a concrete dimension, rather the location in the digital input image is indicated simply by $X_i$.

Analogously, the term $x_i$ is a shortcut notation for a tuple $\{x_1; ... ; x_m\}$ containing m location values and representing a discrete location $x_i$ - or the position vector to that location - in the array representing the intermediate image data. Due to the downsampling, the number of intermediate image locations m is lower than the number of input image locations $M$. The location $x_i$ may be represented by a pixel or a preferably coherent set of pixels in the input intermediate data. The discrete location $x_i$ denotes e.g. a location variable $\{x_1\}$ in the case of one-dimensional intermediate image data, a pair of discrete location variables $\{x_1; x_2\}$ in the case of two-dimensional intermediate image data and a triplet of discrete location variables $\{x_1; x_2; x_3\}$ in the case of three-dimensional intermediate image data. In the i-th dimension, the array may contain $m_i$ locations, i.e. $x_i = \{x_{i,1}, ..., x_{i,m_i}\}$. In total, $I_d(x_i)$ may contain $(m_1 \times ... \times m_n)$ elements. In the following, no reference will be made to a concrete location or a concrete dimension, rather the location in the digital intermediate image is indicated simply by $x_i$.

As will be described in further detail below, the baseline estimate can be computed using a fit to at least a part of the intermediate image data. Computationally, the result of the fit, i.e. the baseline estimate, is represented by discrete baseline estimation data at a number of baseline estimate locations, such as pixels or voxels. The baseline estimation data may be an array $f_d(x_i)$ having the same dimensionality as the input image data and intermediate image data. Thus, for a one-dimensional digital intermediate image, the baseline estimate may be presented as a discrete curve graph, while for a two-dimensional digital intermediate image, the baseline estimate may be presented as a discrete graph of a curved surface.

As was described at the outset, the digital input image may be composed of in-focus components and out-of-focus components. The in-focus components may also be referred to as in-focus contributions, as their presence in the digital input image contributes to an overall sharp appearance. The out-of-focus components may also be referred to as out-of-focus contributions, since they contribute to making the digital input image appear blurred.

The baseline estimate represents the out-of-focus contributions. That is, the above apparatus functions particularly well for applications where the in-focus contributions can be assumed to have a high spatial frequency e.g. being responsible for intensity and/or color changes that take place over a short distance in the digital input image, while the out-of-focus contributions are assumed to be blurred background having low spatial frequency, i.e. leading to predominantly gradual intensity and/or color changes that extend over comparatively large regions of the digital input image.

The apparatus also works for applications where the content of interest is in the background having a comparatively low spatial frequency and appears in the digital input image together with image noise that has a relatively high spatial frequency.

Due to its low spatial frequency, the background can be considered as a more or less smooth baseline on which the in-focus components and/or the image noise are superimposed as features having high spatial frequency. The baseline estimate is an estimate of said baseline in the intensity data and/or color data. Therefore, the baseline estimate represents an approximation of the background.

Further, owing to its low spatial frequency, the information content of the background originally present in the digital input image is not lost or at least not significantly lost during downsampling. Therefore, the information content of the background is carried over from the input image data to the intermediate image data during downsampling without being altered (except for scaling).

The initial object is also achieved by a computer-implemented image processing method for computing a baseline estimate of a digital input image, wherein the method comprises the steps of downsampling the digital input image by a predetermined downsampling factor to obtain a digital intermediate image and computing the baseline estimate based on the digital intermediate image.

This method benefits from the same advantages as already explained for the inventive apparatus. In particular, it can be carried out in a comparatively short computation time using only relatively little memory and little memory bandwidth due to the downsampling step.

The above apparatus and method may be further improved by adding one or more of the features described in the following. Each of these features may be added to the method and/or the apparatus of the invention independently of the other features. In particular, a person skilled in the art -with knowledge of the inventive apparatus - is capable of configuring the inventive method such that the inventive method is capable of operating the inventive apparatus. Moreover, each feature has its own advantageous technical effect, as explained hereinafter.

Preferably, the predetermined downsampling factor d is an integer factor. In other words, the number of input image locations is an integer multiple of the number of intermediate image locations. In particular, the number of input image locations divided by the number of intermediate image locations equals to the downsampling factor d, in the case of a one-dimensional digital input image and digital intermediate image. If the digital input image and the digital intermediate image are two-dimensional, the ratio between the number of input image locations and the number of intermediate image locations equals to the square of the downsampling factor d. Likewise, in case of a three-dimensional digital input image and digital intermediate image, the number of input image locations divided by the number of intermediate image locations equals to the cube of the downsampling factor d. The downsampling factor may be different for each dimension of the digital input image. In this case, the downsampling factor assumes the more general form $d_i$, where i represents the dimension. For example, the downsampling factor may be different in each of the directions of a two-dimensional image, $d_1 \neq d_2$. If the digital input image has three dimensions, e.g. represents a volume, two or more of the downsampling factors for the different dimension may be different. Of course, in the simplest case, the downsampling factor is the same for each dimension. In this context, a dimension does not necessarily need to represent a spatial dimension. For example, the third dimension may represent a color band or primary of a color space, in which the digital input image is represented.

Consequently, the digital image processing apparatus may be configured to generate the digital intermediate image through a rate reduction by the downsampling factor $d_i$. In particular, the digital image processing apparatus may be configured to fill the array representing the intermediate image data $I_d(x_i)$ with every $d_i$-th value from the array representing the input image data. In this case, the intensity value at the location $x_i$ of the digital intermediate image is equal to the intensity value at the location $d_i \cdot x_i$ of the digital input image:

$$I_d(x_i) = I(d_i \cdot x_i)$$

Using the downsampling factor $d_i$, the location values $x_i$ of the digital intermediate image and the location values $X_i$ of the digital input image may thus be converted back and forth:

$$x_i = \frac{X_i}{d_i}$$

Optionally, the digital image processing apparatus may be configured to select the first value and then every $d_i$-th value from the array representing the input image data.

If the digital input image is a three-dimensional image, in particular an XYZ image stack and, under the assumption that the background has a low spatial frequency in all dimensions, the number of Z planes can be reduced during downsampling by filling the array representing the intermediate image data with every $d_3$-th plane or with the first plane and then every $d_3$-th plane.

Alternatively, the digital image processing apparatus may be configured to compute the digital intermediate image based on the digital input image through average pooling, maximum pooling, minimum pooling or other types of downsampling techniques.

The digital image processing apparatus may be configured to generate a digital output image solely based on the baseline estimate. The digital output image may comprise output image data $O(x_i)$ at a number of output image locations, such as pixels or voxels. Depending on the application, it may be sufficient if the number of output image locations is equal to the number of intermediate image locations. In this case, the number of baseline estimate locations can remain unchanged and the output image data $O(x_i)$ may be intensity data corresponding to the baseline estimation data $f_d(x_i)$:

$$O(x_i) = f_d(x_i)$$

Consequently, the digital output image, the digital intermediate image and the baseline estimate may have the same image resolution. In applications where the content of interest is particularly present in the background, this embodiment allows an extraction of the background and thus provides an enhanced digital output image.

In certain situations, however, the number of output image locations needs to be higher than the number of intermediate image locations. For such situations, the digital image processing apparatus may be configured to upsample the baseline estimate by a predetermined sampling factor and to compute the digital output image based on the upsampled baseline estimate.

In particular, the digital image processing apparatus may be configured to compute upsampled baseline estimation data $f_u(X_i)$ from the baseline estimation data $f_d(x_i)$ by means of a nearest-neighbor interpolation, a linear interpolation, a bilinear interpolation, a Lanczos interpolation, AI-based interpolation algorithms or other types of upsampling techniques. The output image data $O(x_i)$ may then be intensity data corresponding to the upsampled baseline estimation data $f_u(X_i)$.

$$O(X_i) = f_u(X_i)$$

Preferably, the number of output image locations is equal to the number of input image locations. In particular, the number of baseline estimate locations may be increased to the number of input image locations during upsampling. In other words, the upsampling factor may be complementary or, more specifically reciprocal, to the downsampling factor $d_i$. Thus, a full-size baseline estimate can be obtained without having to compute any baseline estimate from the full-size digital input image. Of course, it is also possible to use upsampling factors that are not the reciprocal of the down-sampling factor $d_i$ in the respective dimension.

Due to the already low spatial frequency of the background, upsampling the baseline estimate will not lead to the introduction of upsampling artifacts. For small downsampling factors d < ~3, the nearest-neighbor interpolation results in satisfactory upsampling to full-size. In the case of high downsampling factors d > ~3, more sophisticated interpolation algorithms, such as bilinear interpolation, Lanczos interpolation and AI-based interpolation algorithms are preferred for upsampling to full-size.

In the inventive method, the step of computing the baseline estimate may thus also comprise the step of upsampling the baseline estimate.

Optionally, the digital image processing apparatus may be configured to compute the digital output image based on the digital input image, from which the baseline estimate has been removed. Preferably, the baseline estimate is upsampled to full-size prior to removal from the digital input image. In particular, the digital image processing apparatus may be configured to subtract the upsampled baseline estimation data $f_u(X_i)$ from the input image data $I(X_i)$ in order to obtain the output image data $O(X_i)$:

$$O(X_i) = I(X_i) - f_u(X_i)$$

The functionality of this embodiment is based on the assumption that the intensity and/or color changes across the digital input image may be separated additively into a high spatial frequency in-focus component $I_1(X_i)$ and a low spatial frequency out-of-focus-component $I_2(X_i)$ according to the following equation:

$$I(X_i) = I_1(X_i) + I_2(X_i)$$

By subtracting the upsampled baseline estimation data $f_u(X_i)$ from the input image data $I(X_i)$, the in-focus component $I_1(X_i)$ is maintained in the output image data $O(X_i)$, while the out-of-focus-component $I_2(X_i)$ represented by the upsampled baseline estimation data $f_u(X_i)$ is removed. Thereby, an enhanced digital output image, in which the amount of blurred background is reduced, results.

In order to avoid aliasing effects caused e.g. by downsampling the high spatial frequency in-focus components of the digital input image, the digital image processing apparatus may be configured to apply an anti-aliasing filter, such as a low-pass filter to the digital input image prior to downsampling. In particular, the digital image processing apparatus may be configured to compute a convolution of the input image data with a suitable filter kernel before carrying out the downsampling described above. The digital intermediate image may then be obtained in a subsequent step by downsampling the filtered digital input image.

According to an embodiment with improved computational efficiency, the digital image processing apparatus may be configured to carry out the downsampling simultaneously to filtering the digital input image. For example, the filtering may be carried out on the full-size digital input image, wherein the filter output is only computed at a reduced number of input image locations. Preferably, the filter output is only computed at every p-th input image location or at the first input image location and then at every p-th input image location. A separate downsampling step can thus be dispensed with.

Consequently, in the inventive method, the step of downsampling the digital input image may comprise the step of filtering the digital input image.

Optionally, the filtering may also be carried out on the intermediate image data. Moreover, the low-pass filtering may be implemented in Fourier space by multiplication with a weighing function that suppresses high-frequency components. Besides a low-pass filter, the digital image processing apparatus may be configured to apply any other linear and/or time invariant filter to at least one of the digital input image and the digital intermediate image.

In applications, where no aliasing effects are to be expected during downsampling, it is preferred not to apply any filter to the digital input image and the digital intermediate image.

As briefly mentioned above, the baseline estimate can be computed using a fit to the intermediate image data e.g., a polynomial fit or a spline fit. Thus, the digital image processing apparatus may be configured to compute the baseline estimation data using a least-square minimization criterion, which is to be minimized for the fit. Said least-square minimization criterion $M(f(x_i))$ may have the following form:

$$M(f_d(x_i)) = P(f_d(x_i)) + C(f_d(x_i))$$

where $P(f_d(x_i))$ is a penalty term and $C(f_d(x_i))$ is a cost function, as will be explained below.

The least-square minimization criterion may comprise the penalty term $P(f_d(x_i))$, in order to ensure that the baseline estimation data $f_d(x_i)$ are an accurate representation of only the out-of-focus contributions $I_{d,2}(x_i)$ in the intermediate image data $I_d(x_i)$ and to avoid that the baseline estimation data are fitted to the in-focus contributions $I_{d,1}(x_i)$ of the intermediate image data $I_d(x_i)$. In particular, the penalty term may take any form that introduces a penalty if the baseline estimate is fitted to data that are considered to belong to the in-focus component. Such a penalty may be created by increasing the penalty term in value if the in-focus component of the intermediate image data is represented in the baseline estimation data.

Under the assumption that the out-of-focus component has a low spatial frequency, the penalty term may be a term that becomes large if the spatial frequency of the baseline estimate becomes large. Such a term may be in one embodiment a roughness penalty term which penalizes nonsmooth baseline estimation data that deviate from a smooth baseline. Such a roughness penalty term effectively penalizes the fitting of data having high spatial frequency.

For example, a deviation from a smooth baseline may lead to large values in at least one of the first derivative, i.e. the steepness or gradient, and the second derivative, i.e. the curvature, of the baseline estimation data. Therefore, the roughness penalty term may contain at least one of a first spatial derivative of the baseline estimation data, in particular the square and/or absolute value of the first spatial derivative, and a second derivative of the baseline estimation data, in particular the square and/or absolute value of the second spatial derivative. More generally, the penalty term may contain a spatial derivative of any arbitrary order of the baseline estimation data, or any linear combination of spatial derivatives of the baseline estimation data.

Without loss of generality, the penalty term $P(f_d(x_i))$ may have the following form for the one-dimensional case for example:

$$P(f_d(x_i)) = r \sum_{i=1}^{m} \left( \partial f_d(x_i) \right)^2$$

where r is a regularization parameter and $\partial$ is a discrete operator for computing the first derivative. The utility of the regularization parameter r is explained further below.

More generally, the penalty term $P(f_d(x_i))$ may have the form:

$$P(f_d(x_i)) = r \sum_{i=1}^{m} \left( \partial^j f_d(x_i) \right)^2$$

where $\partial^j$ is a discrete operator for computing the $j$-th derivative. For multidimensional digital intermediate images, different penalty terms $r_i$ may be used in the different dimensions

The least-square minimization criterion may further comprise the cost function $C(f_d(x_i))$, which represents a difference between the intermediate image data $I_d(x_i)$ and the baseline estimation data $f_d(x_i)$. An example of a cost function for the one-dimensional case is:

$$C(f_d(x_i) = \| I_d(x_i) - f_d(x_i) \|$$

where $\|...\|$ denotes the $L_1$-Norm i.e., the sum of absolute values. For the multidimensional case, the sum of the root-mean-square values across all dimensions of the sum of squared differences between the intermediate image data and the baseline estimation data in the i-th dimension may be used instead of the $L_1$-Norm.

In certain applications, the digital intermediate image may comprise both high-frequency in-focus components and high-frequency image noise overlaid with low frequency out-of-focus components. In this situation, it is preferred to distinguish between the in-focus components and image noise when computing the baseline estimate. That is, the baseline estimate should not be influenced by the in-focus components, while image noise is allowed to influence the baseline estimate, in order to be reflected in the baseline estimate.

To achieve this, the digital image processing apparatus may be configured to obtain e.g., from external user input, a predetermined threshold value *s*, which is larger than zero and allows a differentiation between the high frequency in-focus components and the high-frequency image noise.

Assuming that the image noise follows the Poisson statistic, any intensity peak, which surpasses the baseline estimation data by more than the predetermined threshold value *s* can be considered as belonging to the in-focus components. Conversely, intensity peaks, which are closer to the baseline estimation data than the predetermined threshold value *s* can be considered as image noise.

If a low-pass filter has been applied to the digital input image prior to downsampling, the digital image processing apparatus may be configured to compute an adapted threshold value $s_d$ based on the predetermined threshold value *s* and the downsampling factor d e.g. for a two-dimensional image as follows:

$$s_d = \frac{s}{d}$$

or in a general case when the downsampling factor - indicated by $d_i$ - is different for different *N* dimensions *i*:

$$s_d = s / \prod_i^N \sqrt{d_i}$$

The predetermined threshold value *s* or, if computed, the adapted threshold value $s_d$ may be included in a truncated difference term of the cost function. The truncated difference term may be symmetric or asymmetric. Preferably, the truncated difference term may be a truncated quadratic term representing the difference between the intermediate image data $I_d(x_i)$ and the baseline estimation data $f_d(x_i)$, wherein the output value of the truncated quadratic term is limited to a constant value, if the difference between the intermediate image data and the baseline estimation data is larger than the respective threshold value s or $s_d$. Otherwise, the value of the truncated quadratic term is equal to the square of the difference between the intermediate image data and the baseline estimation data. Thus, the baseline estimation data will follow intensity peaks of the in-focus components only to a limited amount and intensity peaks of the image noise all the more. The truncated quadratic term $\varphi(f_d(x_i))$ may be of the form:

$$\varphi(f_d(x_i)) = \begin{cases} (I_d(x_i) - f_d(x_i))^2 \text{ if } I_d(x_i) - f_d(x_i) \leq s \\ s^2 \text{ else} \end{cases}$$

Using the truncated quadratic term $\varphi(f_d(x_i))$, the cost function $C(f_d(x_i))$ may be expressed as:

$$C(f_d(x_i)) = \sum_{i=1}^m \varphi(f_d(x_i))$$

The digital image processing apparatus may further be configured to compute the baseline estimate, in particular the fit to the intermediate image data using an iterative algorithm. This embodiment is preferred, since it makes use of the advantage of the present invention in every one of its iteration steps. Optionally, the iterative algorithm may comprise a first iterative stage and a second iterative stage, the first and second iterative stages together representing one iteration step or iteration cycle.

For example, the digital image processing apparatus may be configured to compute the baseline estimate using an iterative half-quadratic minimization scheme aimed at minimizing the least-square minimization criterion. The half-quadratic minimization scheme may e.g. comprise at least part of the LEGEND algorithm, which is computationally efficient. The LEGEND algorithm is described in Idier, J. (2001): Convex Half-Quadratic Criteria and Interacting Variables for Image Restoration, IEEE Transactions on Image Processing, 10(7), p. 1001-1009, and in Mazet, V., Carteret, C., Bire, D, Idier, J., and Humbert, B. (2005): Background Removal from Spectra by Designing and Minimizing a Non-Quadratic Cost Function, Chemometrics and Intelligent Laboratory Systems, 76, p. 121-133. Both articles are herewith incorporated by reference in their entirety.

The LEGEND algorithm introduces discrete auxiliary data $D_l(x_i)$ that are preferably of the same dimensionality as the intermediate image data $I_d(x_i)$. These auxiliary data are updated in each iteration cycle, preferably in the first iterative stage, based on the latest baseline estimation data and the intermediate image data. In particular, the auxiliary data are updated as follows:

$$D_l(x_i) = \begin{cases} (2\alpha - 1)\left(I_d(x_i) - f_{d,l-1}(x_i)\right) & \text{if } I_d(x_i) - f_{d,l-1}(x_i) \le s \\ -I_d(x_i) + f_{d,l-1}(x_i) & \text{else} \end{cases}$$

where $l = 1\ ...L$ is the index of the current iteration cycle and $\alpha$ is a constant value e.g., 0.493.

In the second iterative stage, the baseline estimation data may be updated based on the previously calculated, updated auxiliary data, the baseline estimation data from the previous iteration cycle and the penalty term using the following formula:

$$f_{d,l}(x_i) = \underset{f_d}{\text{argmin}} \left[ \left\| I_d(x_i) - f_{d,l-1}(x_i) + D_l(x_i) \right\|^2 + P(f_d(x_i)) \right]$$

Alternatively, the baseline estimation data are computed using a convolution of a discrete Green's function $G(x_i)$ with a sum of the intermediate image data $I_d(x_i)$ and the updated auxiliary data $D_l(x_i)$, in this second iterative stage. In other words, the second iterative step of the LEGEND algorithm may be replaced by the following iterative step, where the updated baseline estimation data $f_{d,l}(x_i)$ is computed in the $l$-th iteration cycle using the Green's function $G(x_i)$:

$$f_{d,l}(x_i) = G(x_i) * \left( I_d(x_i) + D_l(x_i) \right)$$

Without loss of generality, the Green's function $G(x_i)$ may have the following form for the one-dimensional case:

$$G(x_i) = F^{-1}\left[ \frac{1}{1 - r \cdot F\left[ \frac{\partial P(f_d(x_i))}{\partial f_d(x_i)} \right]} \right]$$

where F[...] is the discrete Fourier transform, F⁻¹[...] is the inverse discrete Fourier transform, r is the regularization parameter, and $\frac{\partial}{\partial}$ the functional derivative. Again, the regularization parameter may be different for each dimension, i.e. $r = r_j$, where $j$ represents a dimension.

This step reduces the computational burden significantly as compared to the traditional LEGEND algorithm. The reduced computational burden results from the fact that a convolution is computed. This computation can be efficiently carried out using an FFT algorithm. Moreover, the second iterative step may make full use of an array processor, such as a graphics processing unit (GPU) or an FPGA due to the FFT algorithm.

As a starting step in the iterative algorithms, an initial set of baseline estimation data (e.g. $f_{d,1}(x_i) = I_d(x_i)$) and an initial set of auxiliary data (e.g. $d_1(x_i) = 0$) can be defined. The first and second iteration stages are then preferably repeated until a convergence criterion is met. A suitable convergence criterion may be, for example that the sum of the differences between the current baseline estimation data and the previous baseline estimation data across all locations $x_i$ is smaller than a predetermined threshold.

According to another aspect of the invention, the digital image processing apparatus may be configured to obtain a predetermined feature size, which is larger than zero and representative for features of interest contained in the digital input image. In particular, the predetermined feature size can be used to differentiate, whether an image feature is to be considered as constituting the in-focus contribution or the out-of-focus contribution.

For example, the feature size may be expressed as a cutoff frequency $\omega_{\text{cutoff}}$, wherein image features having a spatial frequency higher than the cutoff frequency $\omega_{\text{cutoff}}$ are considered to constitute the in focus contribution, whereas image features with a spatial frequency lower than the cutoff frequency $\omega_{\text{cutoff}}$ are considered to belong to the background i.e., the out-of-focus contribution.

The feature size may also be expressed as a predetermined feature scale y denoting the number, in particular the square number of pixels, which the biggest or average feature of interest takes up in the digital input image. All image features that are smaller than the predetermined feature scale y are considered to constitute the in-focus contribution, while image features larger than the predetermined feature scale y are considered to be part of the out-of-focus contribution i.e., the background.

Alternatively, the feature size may be given as a predetermined feature length λ, which denotes the spatial extent of the biggest or average feature of interest along a single dimension. The predetermined feature length λ may be the square root of the predetermined feature scale γ given in pixels:

$$\lambda = \sqrt{\gamma},$$

or, if the feature length is different in the different dimensions *i*:

$$\lambda_i = \sqrt{\gamma_i},$$

The predetermined feature length λ may also be expressed as a number of pixels or in length units.

The feature size, in particular the cutoff frequency, the feature scale or the feature length may be obtained by external user input. Alternatively or additionally, the digital image processing apparatus may be configured to automatically compute the feature size, in particular the cutoff frequency, the feature scale or the feature length from the input image data. For example, a Fourier Ring Correlation may be used for this purpose. A suitable Fourier Ring Correlation is disclosed e.g., in Koho, Sami; Tortarolo, Giorgio; Castello, Marco; Deguchi, Takahiro; Diaspro, Alberto; Vicidomini, Giuseppe (2019): Fourier Ring Correlation Simplifies Image Restoration in Fluorescence Microscopy, https://www.nature.com/articles/s41467-019-11024-z. This article is herewith incorporated by reference in its entirety.

In general, the predetermined feature size may be used to improve the accuracy of the estimated baseline. This will be described in further detail below. The baseline estimate may then be computed in such a way that it represents those image features being larger than the predetermined feature size.

When computing the baseline estimate from the digital intermediate image, consideration should be given to the effect downsampling has on the feature size, if the predetermined feature size is given in respect to the full-size digital input image. After all, the digital intermediate image is effectively a downscaled version of the digital input image.

For this purpose, the digital image processing apparatus may be configured to compute an adapted feature size based on the predetermined feature size and the downsampling factor d. In particular, the digital image processing apparatus may be configured to compute an adapted feature scale $\gamma_d$ based on the predetermined feature scale γ and the downsampling factor d as follows:

$$\gamma_d = \frac{\gamma}{d^2}$$

or in a general case when the downsampling factor is different for different dimensions, where it is also considered that the feature scale may also be different for each dimension:

$$\gamma_{d,i} = \frac{\gamma_i}{d_i^2}$$

Likewise, the digital image processing apparatus may be configured to compute an adapted feature length $\lambda_d$ based on the predetermined feature length λ and the downsampling factor d as follows:

$$\lambda_d = \frac{\lambda}{d}$$

or, in a more general form:

$$\lambda_{d,i} = \frac{\lambda_i}{d_i}$$

The digital image processing apparatus may be configured to compute the baseline estimate based on the digital intermediate image and the adapted feature size. For example, the above-mentioned penalty term in the least-square minimization criterion may include the adapted feature size. In particular, the adapted feature size, preferably the adapted feature scale or the adapted feature length may be included in the penalty term as a multiplicative weighing factor, e.g. as the regularization parameter r. The regularization parameter r may be chosen such that the penalty term results in a scalar, dimensionless quantity.

That is, for digital intermediate images having a large adapted feature scale or adapted feature length, the penalty term is amplified by the weighing factor. Conversely, for digital intermediate images having a small adapted feature scale or adapted feature length, the effect of the penalty term is attenuated by the weighing factor. Due to this amplification and attenuation of the penalty term, the resulting baseline estimate is forced to be smoother in the former case, while being allowed to have a certain roughness in the latter case.

Additionally or alternatively, the adapted feature size, preferably the adapted feature scale or the adapted feature length may be included in the penalty term as an additive weighing constant.

Instead of the multiplicative weighing factor or the additive weighing constant, the adapted feature size may also be used for selecting an optimal polynomial order $K$ that is used for the above-mentioned polynomial fit. That is, the baseline estimation data may be represented by the K-order polynomial in any of the $N$ dimensions $i$:

$$f(x_i) = \sum_{k=0}^{K} a_{i,k} \, x_i^k$$

where $a_{i,k}$ are the coefficients of the polynomial in the i-th dimension. For each dimension $i = 1, \cdots, n$, a separate polynomial may be computed. The optimum value for the maximum polynomial order $K$ depends on the required smoothness of the baseline estimation data. For a smooth baseline (i.e. large adapted feature size), the polynomial order $K$ must be set as low as possible, whereas fitting a highly irregular background (i.e. small adapted feature size) may require a higher order $K$.

In the case of a polynomial fit, the baseline estimation data may consist only of the polynomial coefficients $a_{i,k}$ or of intensity data representing the graph of the K-order polynomial.

Instead of obtaining the predetermined feature size and then computing the adapted feature size, the digital image processing apparatus may also be configured to automatically compute the feature size from the intermediate image data and utilize it during the computation of the baseline estimate.

In order to make full use of the downsampling, while preventing excessive downsampling, the digital image processing apparatus may be configured to limit the downsampling factor d to a maximum downsampling factor $d_{max}$ based on the predetermined feature size. In particular, the digital image processing apparatus may be configured to limit the downsampling factor d, such that the Nyquist condition is fulfilled. For example, the maximum downsampling factor $d_{max}$ may be less than the square root of the predetermined feature scale y or less than the predetermined feature length $\lambda$:

$$d_{max} < \sqrt{\gamma} = \lambda$$

or, in a more general form:

$$d_{max,i} < \sqrt{\gamma_i} = \lambda_i$$

Preferably, the maximum downsampling factor $d_{max}$ is less than or equal to one fourth of the predetermined feature length $\lambda$. Alternatively, the maximum downsampling factor $d_{max}$ is not larger than one fourth of the square root of the predetermined feature scale y.

$$d_{max} \leq \frac{\sqrt{\gamma}}{4} = \frac{\lambda}{4}$$

Or, more generally:

$$d_{max,i} \leq \frac{\sqrt{\gamma_i}}{4} = \frac{\lambda_i}{4}$$

Thus, for a typical range of the feature scale y between 100 and 400 pixels, the maximum downsampling factor $d_{max,i}$ is given by 2.5 to 5.

According to another aspect, the digital image processing apparatus may comprise a microprocessor or may be configured as a microprocessor or as part of such microprocessor. The digital image processing apparatus and/or the microprocessor may comprise a memory as a combination of read-only memory (ROM) with any arbitrary amount of random access memory (RAM). For a 2D 2048x2048 16-bit single channel image and d = 2, the memory may have a memory capacity of less than 32 MiB, in particular less than 27 MiB. When considering real-time application, the memory may have a memory bandwidth of less than 50 GiB/s. Owing to the downsampling, the computation of the baseline estimate can be achieved on hardware having such comparatively low performance stats.

Preferably, the digital image processing apparatus is an embedded processor. Embedded processors being a class of inexpensive computers or computer chips, can be embedded in various machines and devices to control electrical and mechanical functions there. Embedded processors are generally small in size, use simple microprocessors and do not have to execute elaborate computations or be extremely fast, nor do they need great input/output capability. Owing to the downsampling, these conditions apply to the digital image processing apparatus.

Alternatively, the digital image processing apparatus may be only part of such an embedded processor. This also allows the digital image processing apparatus to be integrated into a device requiring the computation of baseline estimates.

In particular, the embedded processor may be an embedded processor for/of a microscope. Advantageously, the inventive concept may thus be utilized in the field of microscopy.

Consequently, the initial object is also achieved by a microscope comprising an amended processor, wherein the embedded processor comprises or is a digital image processing apparatus according to any one of the above embodiments. The microscope thus benefits from the advantages described above of the digital image processing apparatus. In particular, the computation of the baseline estimate may be performed in real time and the enhanced digital output images may be output as a live image feed due to the shortened computation time.

According to another aspect, the inventive method may be adapted to operate a digital image processing apparatus according to any one of the above described embodiments. Advantageously, this embodiment allows the inventive method to be carried out on hardware that is specifically dedicated to a given particular purpose. In particular, the inventive method may be executed on an embedded processor of a microscope.

Alternatively, the inventive method may also be adapted to operate a general-purpose computer. Thereby, the applicability of the inventive method is improved. Accordingly, the initial object is achieved by a computer-program product comprising a program code which, when executed by a computer, such as a general-purpose computer, causes the computer to carry out the inventive method. Likewise, the initial object is also achieved by a computer-readable medium comprising a program code which, when executed by the computer, cause the computer to carry out the inventive method. Both the computer-program product and the computer-readable medium are advantageous and achieve the initial object, since they represents means for carrying out the inventive method.

The computation of the baseline estimate itself is not limited to the procedures described above and can be accomplished by virtually any known method for estimating a baseline that correctly represents the background of a given digital image.

The initial object of the present invention is further achieved by a machine learning product for processing a digital input image. The machine learning product is configured to compute a baseline estimate of the digital input image, which has been trained by pairs of different digital input images and baseline estimates, each baseline estimate of a pair computed from the digital input image of the pair using at least one of a) the inventive method and b) the inventive apparatus.

This machine learning product is advantageous, since it is capable of emulating the computations of the inventive method and/or the inventive apparatus due to its training by the pairs of different digital input images and baseline estimates.

The respective baseline estimate of the pairs may be the upsampled baseline estimate. Consequently, the machine learning product may be configured to compute a full-size baseline estimate.

A training method for a machine learning product by pairs of different digital input images and baseline estimates also achieves the initial object, wherein each baseline estimate of a pair is computed from the digital input image of the pair using at least one of a) the inventive method and b) the inventive apparatus.

The training method is advantageous, as it allows to create machine learning products having the characteristics mentioned above.

The following examples for utilizing the baseline estimate computed from the digital intermediate image for a qualitative evaluation of the digital input image are given below:

For example, the baseline estimate computed from the digital intermediate image may be compared with a predefined reference baseline estimate, which has been computed by downsampling a comparative baseline estimate of a reference digital input image. The predefined reference baseline estimate may derive from external user input and may be representative for an ideal state. This comparison allows for the evaluation of whether the current digital input image satisfies said ideal state. Advantageously, the reference baseline estimate needs to be computed only once in preparation for the respective application and can then be used repeatedly for the above-mentioned comparison.

In another example, the computed baseline estimate can be used for determining the size of an out-of-focus region in the digital intermediate image. The determined size can then be referenced to the overall image size of the digital intermediate image to arrive at a relative size of the out-of-focus region. Due to the geometric similarity between the baseline estimate and the comparative baseline estimate mentioned above, the corresponding out-of-focus region in the digital input image has substantially the same relative size. The relative size can then be used for determining a sharpness score of the digital input image for example. Therefore, the sharpness score of the digital input image can be estimated without having to compute any baseline estimate of the full-size image.

In applications where two or more digital input images of the same object are recorded at full-size but with various focal settings, the baseline estimates computed from the respective downsampled digital input images can be mutually compared in order to assess which focal setting suits the most for recording the object. For example, the focal setting resulting in the smallest out-of-focus region can be chosen. Advantageously, this choice can be made without having to compute any baseline estimate from the full-size digital input images.

These examples are not restrictive, and are intended to illustrate that the baseline estimate computed based on the digital intermediate image is in itself qualitatively equivalent to the comparative baseline estimate.

The digital image processing apparatus and each of its functions may be implemented in hardware, in software or as a combination or hardware and software. For example, at least one function of the digital image processing apparatus may at least partly be implemented by a subroutine, a section of a general-purpose processor, such as a CPU, and/or a dedicated processor such as a GPU, FPGA, vector processor and/or ASIC.

The invention will now be described by way of example only using a sample embodiment, which is also shown in the drawings. In the drawings, the same reference numerals are used for features which correspond to each other with respect to at least function and/or design.

The combination of features shown in the enclosed embodiment is for explanatory purposes only and can be modified. For example, a feature of the embodiment having a technical effect that is not needed for a specific application may be omitted. Likewise, a feature which is not shown to be part of the embodiment may be added if the technical effect associated with this feature is needed for a particular application.

Fig. 1:    shows a schematic representation of the digital image processing apparatus according to an exemplary embodiment of the present invention;

Fig. 2:    shows a schematic representation of a flowchart for the image processing method accord-ing to an exemplary embodiment of the present invention;

Fig. 3:    shows a detail from Fig. 2;

Fig. 4:    shows a schematic graphical representation of computation steps;

Fig. 5:    shows an intensity distribution in an exemplary intermediate image data and baseline estimation data;

Fig. 6:    shows an intensity distribution in another exemplary intermediate image data and baseline estimation data;

Fig. 7:    shows an intensity distribution in an exemplary input image data, baseline estimation data and output image data;

Fig. 8    shows a schematic representation of a microscope comprising the digital image processing apparatus being a part of an embedded processor;

Fig. 9    shows a schematic representation of a system comprising a microscope.

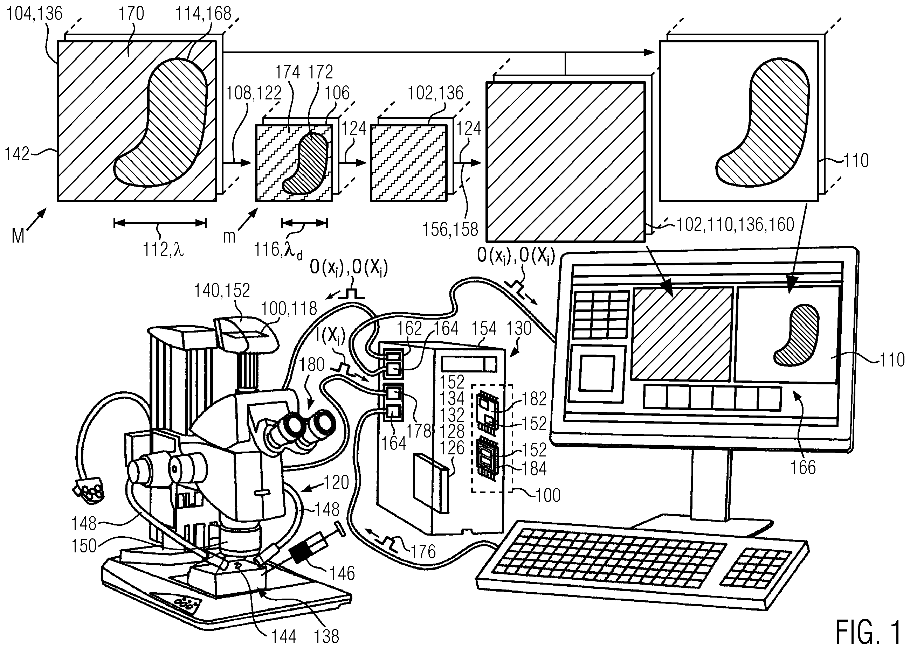

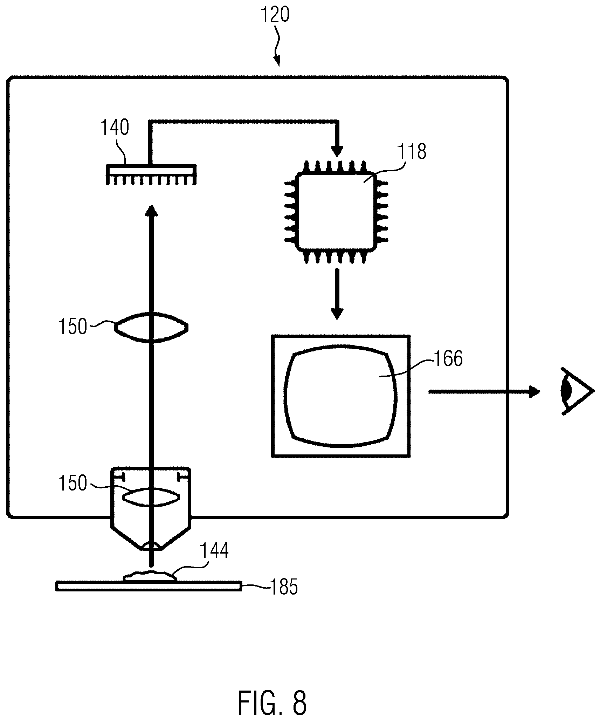

First, the structure and functionality of the digital image processing apparatus 100 is explained with reference to Fig. 1 and Fig. 8. The digital image processing apparatus 100 may be part of a medical observation device, such as a microscope 120 or endoscope. In particular, the digital image processing apparatus 100 may be integrated in the microscope 120 as an embedded processor 118 or as part of such embedded processor 118.

The microscope 120 may comprise an image-forming section 138, which is adapted to capture with a camera 140, a digital input image 104 in the form of input image data 200. Optionally, the camera 140 may produce a time series of subsequent sets of input image data 200.

The camera 140 may be a CCD, multispectral or hyperspectral camera, which records the input image data 200 in a plurality of channels 142, wherein each channel 142 preferably represents a different light spectrum range from the infrared to the ultraviolet. Attentively, the camera 140 may record the input image data 200 in monochrome.

In the case of a CCD camera, three channels 142, e.g. an R-channel, a G-channel and a B-channel may be provided to represent a visible light image of an object 144. In the case of a multi or hyperspectral camera, a total of more than three channels 142 may be used in at least one of the visible light range, the IR light range, the NIR light range and the ultraviolet light range.

The object 144 may comprise animate and/or inanimate matter. The object 144 may further comprise one or more fluorescent materials, such as at least one fluorophore 146. A multispectral or hyperspectral camera may have one channel 142 for each different fluorescence spectrum of the fluorescent materials in the object 144. For example, each fluorophore 146 may be represented by at least one channel 142, which is matched to the fluorescence spectrum triggered by an illumination 148. The microscope 120 may be adapted to excite fluorescence e.g. of fluorophores 146 within the object 144 with light having a suitable fluorescence excitation wavelength by the illumination 148. Alternatively or additionally, channels 142 may be provided for auto-fluorescence spectra or for spectra of secondary fluorescence, which is triggered by fluorescence excited by the illumination 148, or for lifetime fluorescence data. Of course, the illumination 148 may also or solely emit white light or any other composition of light without triggering fluorescence in the object 144.

The illumination 148 may be guided through a lens 150, through which the input image data 200 are acquired. The illumination 148 may comprise or consist of one or more flexible light guides to direct light onto the object 144 from one or more different directions. A suitable blocking filter (not shown) may be arranged in the light path in front of the camera 140, e.g. to suppress glare. For fluorescence imaging, a blocking filter preferably blocks only the illumination wavelength and allows the fluorescent light of the fluorophores 146 in the object 144 to pass to the camera 140.

It is apparent - without loss of generality - that the input image data 200 can be captured by any kind of microscope, in particular with a fluorescence light microscope operable in a widefield mode and/or using a confocal laser scanning microscope.

The input image data 200 may be one-dimensional if a line camera is used for the recording. Alternatively, the input image data 200 are two-dimensional if a single channel 142 is contained in a two-dimensional image. The digital input image may have a higher dimensionality than two if more than one channel 142 is comprised and/or if the input image data 200 represent a three-dimensional image.

Three-dimensional input image data 200 may be recorded by the microscope 120 by e.g. using light-field technology, Z-stacking in microscopes, images obtained by a SCAPE microscope and/or a three-dimensional reconstruction of images obtained by a SPIM microscope. In the case of a three-dimensional image, each plane of the three-dimensional input image data 200 may be considered as a two-dimensional input image 104. Again, each plane may comprise several channels 142. Each channel 142 may be regarded as a separate two-dimensional image. Alternatively, a plurality of channels 142 may be interpreted together as a multi-dimensional array.

The microscope 120, in particular the digital image processing apparatus 100 may further comprise an image storage section 152 adapted to contain, at least temporarily, the input image data 200. The digital image processing apparatus 100 may also be part of a computer 130, such as a general-purpose computer, in particular a workstation 154 of the microscope 120 comprising the image storage section 152. The image storage section 152 may comprise a volatile or non-volatile memory, such as a cache memory of a CPU 182 of the computer 130, and/or of a GPU 184 of the computer 130. The image storage section 152 may further comprise RAM, a hard disk drive or an exchangeable storage system, such as a USB stick or an SD card. The image storage section 152 may comprise any combination of these types of memory.

The microscope 120 as shown in Fig. 8 comprises the elements / components shown therein. The microscope 120 can be regarded as a device for imaging an object 144 being located on an object slide 185. This microscope 120 is at least one of compact, easy to use, and is a device being independent from other devices. The microscope 120 of Fig. 8 comprises an integrated display 166 being adapted to display at least one of acquired images, digital input images, and digital output images of the object 144.

The inventive image processing method may be a computer-implemented image processing method. Therefore, a computer-program product 126 comprising a program code 128 which, when executed by the computer 130, causes the computer 130 to carry out the inventive method may be provided. Accordingly, a computer-readable medium 132 comprising the program code 128 may also be provided. In this case, the digital image processing apparatus 100 may serve as an image processor, which is configured to read out the input image data 200 from the image storage section 152 or from an external image-forming section (e.g. the image-forming section 138 of the microscope 120). For this, the computer 130 may comprise an image input section 178.

As is indicated in the upper left half of Fig. 1, the digital input image 104 may be composed of in-focus components 168 and out-of-focus components 170. The digital image processing apparatus 100 primarily serves for computing a baseline estimate 102 representing the out-of-focus components 170. In the following, this function is exemplarily described for applications, where the in-focus components 168 can be assumed to have a high spatial frequency e.g. being responsible for intensity and/or color changes which take place over a short distance in the digital input image 104, while the out-of-focus components 170 are assumed to be blurred background having low spatial frequency, i.e. leading to predominantly gradual intensity and/or color changes that extend over comparatively large regions of the digital input image 104.

In order to save computation time when computing the baseline estimate 102 of the digital input image 104, the digital image processing apparatus 100 is configured to first obtain a digital intermediate image 106 by downsampling the digital input image 104 by a predetermined downsampling factor 108. In the following, the downsampling factor 108 will be denoted as d.

The digital input image 104 may comprise the input image data 200 at a number of input image locations M, such as pixels or voxels. The digital intermediate image 106 may likewise comprise intermediate image data 202 at a number of intermediate image locations m, such as pixels or voxels. Due to the downsampling, the number of intermediate image locations m is lower than the number of input image locations M. The input image data 200 and the intermediate image data 202 may be discrete intensity data and/or discrete color data for example. These input image data 200 are preferably represented by an N-dimensional array $I(X_i)$, where $N$ is an integer equal to or larger than 1. Likewise, the intermediate image data 202 are represented by an $n$-dimensional array $I_d(x_i)$, where $n$ is an integer equal to or larger than 1. Preferably $N$ and $n$ are equal.

Preferably, the predetermined downsampling factor d is an integer factor. In other words, the number of input image locations M is an integer multiple of the number of intermediate image locations m. In particular, the number of input image locations $M$ divided by the number of intermediate image locations m equals to the downsampling factor d, in the case of a one-dimensional digital input image 104 and digital intermediate image 106. If the digital input image 104 and the digital intermediate image 106 are two-dimensional, the ratio between the number of input image locations $M$ and the number of intermediate image locations m equals to the square of the downsampling factor d. Likewise, with a three-dimensional digital input image 104 and digital intermediate image 106, the number of input image locations M divided by the number of intermediate image locations m equals to the cube of the downsampling factor d.

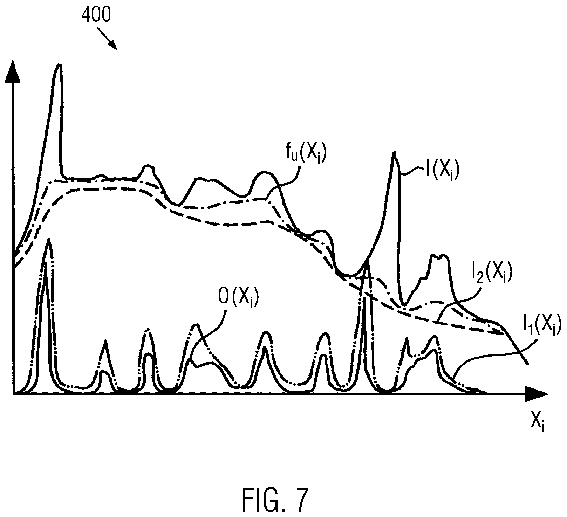

Due to their low spatial frequency, the out-of-focus components 170 (i.e. background) can be considered as a more or less smooth baseline on which the in-focus components 168 are superimposed as features having high spatial frequency. This is illustrated in Fig. 7, where the in-focus components 168 are denoted as $I_1(X_i)$ and the out-of-focus components 170 are denoted as $I_2(X_i)$. The baseline estimate 102 is an estimate of said baseline in the intensity data and/or color data. Therefore, the baseline estimate 102 represents an approximation of the out-of-focus components $I_2(X_i)$.

Further, owing to their low spatial frequency, the information content of the out-of-focus components $I_2(X_i)$ originally present in the digital input image 104 is not or at least not significantly lost during downsampling. Therefore, the information content of the out-of-focus components $I_2(X_i)$ is carried over from the input image data $I(X_i)$ to the intermediate image data $I_d(x_i)$ during downsampling without being altered (except for scaling).

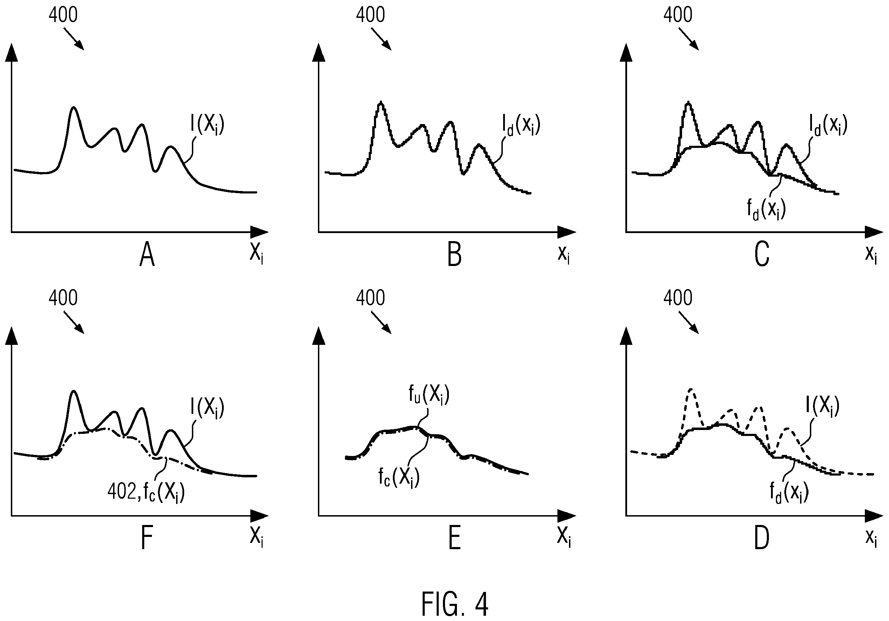

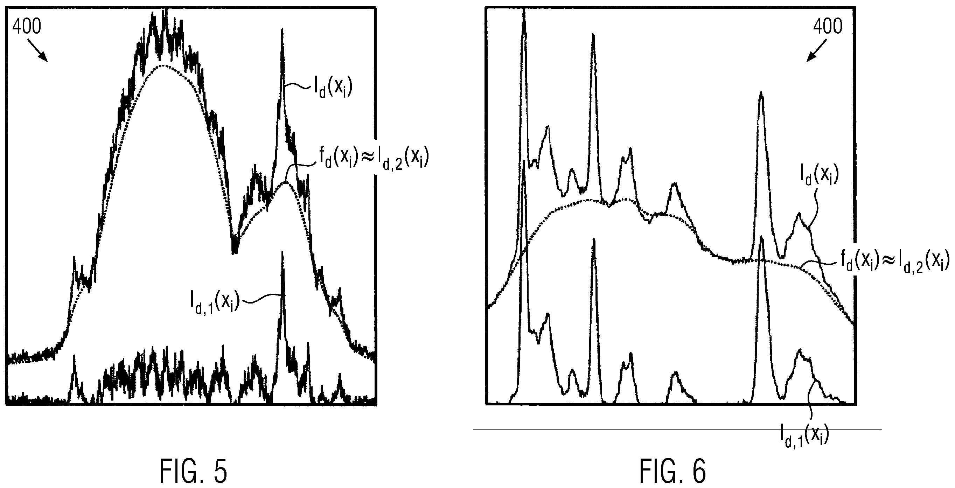

The digital image processing apparatus 100 is further configured to compute the baseline estimate 102 based on the digital intermediate image 106. As will be described in more detail below, the baseline estimate 102 can be computed using a fit to at least part of the intermediate image data $I_d(x_i)$. Computationally, the result of the fit, i.e. the baseline estimate 102, is represented by discrete baseline estimation data 204 at a number of baseline estimate locations, such as pixels or voxels. The baseline estimation data 204 may be an array $f_d(x_i)$ having the same dimensionality as the input image data $I(X_i)$ and intermediate image data $I_d(x_i)$. For a one-dimensional digital intermediate image 106, the baseline estimate 102 may be presented as a curve graph (see e.g. Fig. 4 frames C and D as well as Figs. 5 and 6).

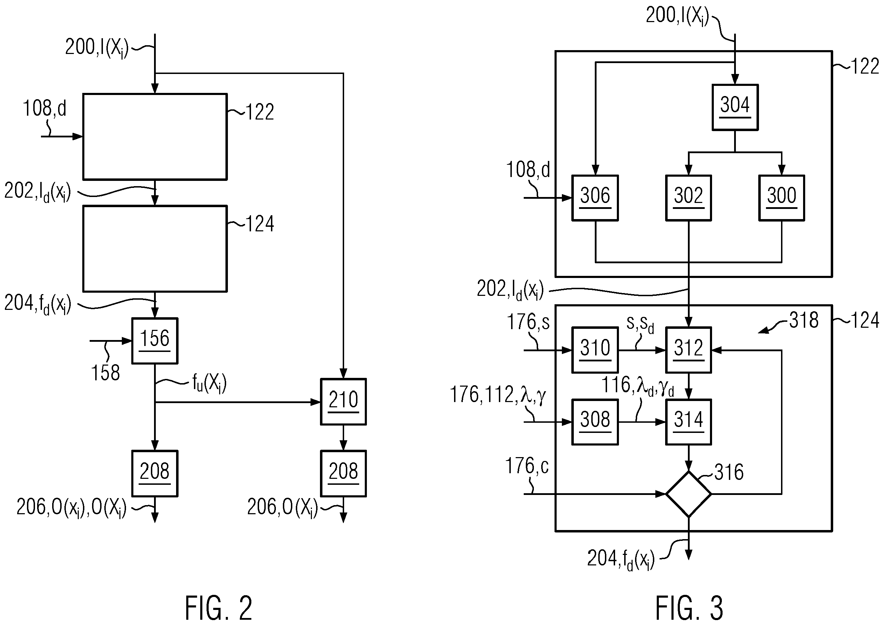

Further details of the inventive aspects are described below with respect to the image processing method and Figs. 2 to 7. It is to be understood that the digital image processing apparatus 100 may be configured to carry out said image processing method.

As can be seen in Fig. 2, the method comprises the step 122 of downsampling the digital input image 104 by the predetermined downsampling factor $d_i$ to obtain the digital intermediate image 106. The downsampling factor $d_i$ may be different for each dimension i of the digital input image. Alternatively, only some dimensions i may have a different downsampling factor or the downsampling factor may be the same for each dimension, i.e. $d_i = d$.

From the detail shown in Fig. 3, it can be seen that step 122 may comprise the step 300 of generating the digital intermediate image 106 through a rate reduction by the downsampling factor $d_i$. In this step 300, the array representing the intermediate image data $I_d(x_i)$ may be filled with every $d_i$-th value from the array representing the input image data $I(X_i)$. In particular, the intensity value at the location $x_i$ of the digital intermediate image is equal to the intensity value at the location $d_i \cdot x_i$ of the digital input image:

$$I_d(x_i) = I(d_i \cdot x_i)$$

Optionally, it may be the first value and then every d-th value from the array representing the input image data $I(X_i)$, which is filled in the array representing the intermediate image data $I_d(x_i)$.

If the digital input image is a three-dimensional image, in particular an XYZ image stack and under the assumption that the background has a low spatial frequency in all dimensions, the number of Z planes can be reduced during downsampling by filling the array representing the intermediate image data $I_d(x_i)$ with every $d_3$-th plane or with the first plane and then every $d_3$-th plane of the input image data $I(x_i)$.

Alternatively, step 122 may comprise step 302 of computing the digital intermediate image based on the digital input image through average pooling, maximum pooling, minimum pooling or other types of downsampling techniques (see Fig. 3).

Optionally, step 122 may comprise the step 304 of applying an anti-aliasing filter, such as a low-pass filter to the digital input image 104 prior to step 300 or step 302. Instead of filtering and downsampling in separate steps, step 122 may comprise the step 306 of simultaneously carrying out the downsampling and filtering of the digital input image 104. For example, the filtering may be carried out on the full-size digital input image 104, wherein the filter output is only computed at a reduced number of input image locations. Preferably, the filter output is only computed at every $d_i$-th input image location or at the first input image location and then every $d_i$-th input image location.

In applications, where no aliasing effects are to be expected during downsampling, it is preferred to directly downsample the digital input image to the digital intermediate image in step 122 without applying any filter.

Next, the method comprises the step 124 of computing the baseline estimate 102 based on the digital intermediate image 106. Just like the digital input image 104, the digital intermediate image 106 also contains in the intermediate image data $I_d(x_i)$ in-focus components 172 denoted by $I_{d,1}(x_i)$ and out-of-focus components 174 denoted by $I_{d,2}(x_i)$. As illustrated in Figs. 5 and 6, the baseline estimation data $f_d(x_i)$ are supposed to reflect the out-of-focus components $I_{d,2}(x_i)$. To achieve this, the baseline estimation data $f_d(x_i)$ are computed using a fit to the intermediate image data $I_d(x_i)$, wherein a least-square minimization criterion is used, which is to be minimized for the fit. Said least-square minimization criterion $M(f(x_i))$ may have the following form:

$$M(f_d(x_i)) = P(f_d(x_i)) + C(f_d(x_i))$$

where $P(f_d(x_i))$ is a penalty term and $C(f_d(x_i))$ is a cost function.

Under the assumption that the out-of-focus components $I_{d,2}(x_i)$ have a low spatial frequency, the penalty term $P(f_d(x_i))$ may be a term that becomes large if the spatial frequency of the baseline estimate 102 becomes large i.e., if the baseline estimation data $f_d(x_i)$ exhibit large values in at least one of the first derivative and the second derivative. Consequently, the penalty term $P(f_d(x_i))$ may contain at least one of a first spatial derivative of the baseline estimation data $f_d(x_i)$, in particular the square and/or absolute value of the first spatial derivative, and a second derivative of the baseline estimation data $f_d(x_i)$, in particular the square and/or absolute value of the second spatial derivative. More generally, the penalty term $P(f_d(x_i))$ may contain a spatial derivative of any arbitrary order and have the following general form for the one-dimensional case:

$$P(f_d(x_i)) = r \sum_{i=1}^{m} \left( \partial^j f_d(x_i) \right)^2$$

where r is a regularization parameter and $\partial^j$ is a discrete operator for computing the $j$-th derivative. The regularization parameter may be different for each dimension $j$ of the digital input image, i.e. $r = r_j$ in the above equation. The penalty term $P(f_d(x_i))$ may also contain a linear combination of spatial derivatives of the baseline estimation data $f_d(x_i)$.

The regularization parameter r can be understood as a multiplicative weighing factor, which depends on the structure of the image. That is, the regularization parameter r roughly represents the spatial size of the features in the in-focus component $I_{d,1}(x_i)$ of the intermediate image data $I_d(x_i)$. In general, the information on said spatial size may be used to improve the accuracy of the estimated baseline. This will be described in further detail below. The baseline estimate 102 may then be computed in such a way that it represent only those image features being larger than said spatial size.

The information on said spatial size may be obtained e.g., from external user input 176, as can be seen in the detail shown in Fig. 3. In particular, a predetermined feature size, which is larger than zero and representative for features of interest contained in the digital input image 104 may be obtained this way. In particular, the predetermined feature size can be used to differentiate, whether an image feature 114 is to be considered as constituting the in-focus components $I_1(X_i)$ or the out-of-focus components $I_2(X_i)$ of the input image data $I(X_i)$.

For example, the feature size may be expressed as a predetermined feature scale y denoting a number of pixels, in particular a square number of pixels. The biggest or average feature of interest takes up that many pixels in the digital input image 104. All image features smaller than the predetermined feature scale y are considered to constitute the in-focus components $I_1(X_i)$, while image features larger than the predetermined feature scale y are considered to be part of the out-of-focus components $I_2(X_i)$ i.e., the background.

Alternatively, the feature size may be given as a predetermined feature length 112 denoted by $\lambda_i$, which represents the spatial extent of the biggest or average feature of interest along a single dimension i. The predetermined feature length $\lambda_i$ may be the square root of the predetermined feature scale $\gamma_i$ given in pixels:

$$\lambda_i = \sqrt{\gamma_i}$$

The predetermined feature length $\lambda_i$ may also be expressed as a number of pixels or in length units.

When computing the baseline estimate 102 from the digital intermediate image 106, it is preferred to take into consideration the effect downsampling has on the feature size, if the predetermined feature size is given in respect to the full-size digital input image 104. After all, the digital intermediate image 106 is effectively a downscaled version of the digital input image 104, as can be seen in the upper left corner of Fig. 1.

For this purpose, an adapted feature size may be computed based on the predetermined feature size and the downsampling factor $d_i$ in an optional step 308. In particular, an adapted feature scale $\gamma_{d,i}$ may be computed based on the predetermined feature scale $\gamma_i$ and the downsampling factor $d_i$ as follows:

$$\gamma_{d,i} = \frac{\gamma_i}{d_i^2}$$

Likewise, an adapted feature length 116 denoted by $\lambda_{d,i}$ may be computed based on the predetermined feature length $\lambda_i$ and the downsampling factor $d_i$ as follows:

$$\lambda_{d,i} = \frac{\lambda_i}{d_i}$$

For example, the penalty term in the least-square minimization criterion may include the adapted feature size. In particular, the adapted feature size, preferably the adapted feature scale $\gamma_{d,i}$ or the adapted feature length $\lambda_{d,i}$ may be included in the penalty term as the regularization parameter r.

$$r_i = \gamma_{d,i} \text{ or } r_i = \lambda_{d,i}^2$$

Depending on the order $j$ of the spatial derivative in the penalty term $P(f_d(x_i))$, the adapted feature scale $\gamma_{d,i}$ or the adapted feature length $\lambda_{d,i}$ may be chosen as the regularization parameter $r_i$ such that the penalty term $P(f_d(x_i))$ results in a scalar, dimensionless quantity.

For illustrative purposes, the influence the adapted feature length $\lambda_{d,i}$ has on the baseline estimate 102 can be seen from a juxtaposition of Figs. 5 and 6. In Fig. 5, the intermediate image data $I_d(x_i)$ of a digital intermediate image 106 with a comparatively small adapted feature length $\lambda_{d,i}$ is shown. Fig. 6 on the other hand shows intermediate image data $I_d(x_i)$ of a digital intermediate image 106 with a comparatively large adapted feature length $\lambda_{d,i}$. This difference in adapted feature lengths $\lambda_{d,i}$ can be perceived from the peak widths shown in Figs. 5 and 6, respectively.

Both Figs. 5 and 6 further show the resulting baseline estimation data $f_d(x_i)$. In Fig. 5, the small adapted feature length $\lambda_{d,i}$ causes the effect of the penalty term $P(f_d(x_i))$ to be attenuated by the multiplicative weighing factor (i.e. the regularization parameter $r_i$). This means, the baseline estimate 102 represented by the baseline estimation data $f_d(x_i)$ of Fig. 5 is 'allowed' to have a less smooth shape. In Fig. 6, the large adapted feature length $\lambda_{d,i}$ leads to the penalty term $P(f_d(x_i))$ being amplified by the multiplicative weighing factor (i.e. the regularization parameter $r_i$). Due to this amplification of the penalty term, the resulting baseline estimate 102 shown in Fig. 6 is forced to be smoother than in Fig. 5.

The least-square minimization criterion may further comprise the cost function $C(f_d(x_i))$, which represents a difference between the intermediate image data $I_d(x_i)$ and the baseline estimation data $f_d(x_i)$. An example of a cost function for the one-dimensional case is:

$$C(f_d(x_i)) = \|I_d(x_i) - f_d(x_i)\|$$

where $\|...\|$ denotes the $L_1$-Norm i.e., the sum of absolute values. For the multidimensional case, the sum of the root-mean-square values across all dimensions of the sum of squared differences between the intermediate image data $I_d(x_i)$

and the baseline estimation data $f_d(x_i)$ in the i-th dimension may be used instead of the $L_1$-Norm.

As can be seen in the detail shown in Fig. 3, a predetermined threshold value $s$, which is larger than zero, may be obtained e.g., from external user input 176. The threshold value $s$ allows a distinction between in-focus components $I_{d,1}(x_i)$ and image noise. Assuming that the image noise follows the Poisson statistic, any intensity peak, which surpasses the baseline estimation data $f_d(x_i)$ by more than the predetermined threshold value $s$ can be considered as belonging to the in-focus components $I_{d,1}(x_i)$. Conversely, intensity peaks, which are closer to the baseline estimation data $f_d(x_i)$ than the predetermined threshold value $s$ can be considered as image noise. That is, the baseline estimate 102 should not be influenced by the in-focus components $I_{d,1}(x_i)$, while image noise is allowed to influence the baseline estimate, in order to be reflected in the baseline estimate 102.

To implement this distinction, the cost function $C(f_d(x_i))$ may comprise a truncated difference term, which includes the predetermined threshold value $s$. The truncated difference term may be symmetric or asymmetric. Preferably, the truncated difference term may be a truncated quadratic term representing the difference between the intermediate image data $I_d(x_i)$ and the baseline estimation data $f_d(x_i)$, wherein the output value of the truncated quadratic term is limited to a constant value, if the difference between the intermediate image data $I_d(x_i)$ and the baseline estimation data $f_d(x_i)$ is larger than the respective threshold value $s$. Otherwise, the value of the truncated quadratic term is equal to the square of the difference between the intermediate image data $I_d(x_i)$ and the baseline estimation data $f_d(x_i)$. The truncated quadratic term $\varphi(f_d(x_i))$ may be of the form:

$$\varphi(f_d(x_i)) = \begin{cases} (I_d(x_i) - f_d(x_i))^2 & \text{if } I_d(x_i) - f_d(x_i) \leq s \\ s^2 & \text{else} \end{cases}$$

Using the truncated quadratic term $\varphi(f_d(x_i))$, the cost function $C(f_d(x_i))$ may be expressed as:

$$C(f_d(x_i)) = \sum_{i=1}^{m} \varphi(f_d(x_i))$$

If a low-pass filter has been applied to the digital input image 104 in step 304, an adapted threshold value $s_d$ is computed in step 310 based on the predetermined threshold value s and the downsampling factor $d_i$ as follows:

$$s_d = s / \prod_{i}^{N} \sqrt{d_i}$$

The adapted threshold value $s_d$ is then used instead of the threshold value s in the truncated quadratic term $\varphi(f_d(x_i))$.

As can be seen in the detail shown in Fig. 3, the baseline estimation data $f_d(x_i)$, in particular the fit to the intermediate image data $I_d(x_i)$ may be computed in an iterative manner with a first iterative stage 312 and a second iterative stage 314.

The first iterative stage 312 and second iterative stage 314 together represent one iteration step, which is repeated until a convergence criterion 316 is met. A suitable convergence criterion may be that for the differences between the baseline estimation data $f_{d,l}(x_i)$ computed in the current iteration step and the baseline estimation data $f_{d,l-1}(x_i)$ computed in the previous iteration step their sum across all locations $x_i$ is smaller than a predetermined convergence threshold c, obtained from external user input 176.

For example, the baseline estimation data $f_d(x_i)$ may be computed using an iterative half-quadratic minimization scheme 318 aimed at minimizing the least-square minimization criterion $M(f(x_i))$. The iterative half-quadratic minimization scheme 318 may e.g. comprise at least part of the LEGEND algorithm, which is described in Idier, J. (2001): Convex Half-Quadratic Criteria and Interacting Variables for Image Restoration, IEEE Transactions on Image Processing, 10(7), p. 1001-1009, and in Mazet, V., Carteret, C., Bire, D, Idier, J., and Humbert, B. (2005): Background Removal from Spectra by Designing and Minimizing a Non-Quadratic Cost Function, Chemometrics and Intelligent Laboratory Systems, 76, p. 121-133. Both articles are herewith incorporated by reference in their entirety.

The LEGEND algorithm introduces discrete auxiliary data $D_l(x_i)$ that are preferably of the same dimensionality as the intermediate image data $I_d(x_i)$. These auxiliary data are updated in each iteration step, preferably in the first iterative stage 312, based on the latest baseline estimation data and the intermediate image data. In particular, the auxiliary data $D_l(x_i)$ are updated as follows:

$$D_l(x_i) = \begin{cases} (2\alpha - 1)\left(I_d(x_i) - f_{d,l-1}(x_i)\right) & \text{if } I_d(x_i) - f_{d,l-1}(x_i) \leq s \\ -I_d(x_i) + f_{d,l-1}(x_i) & \text{else} \end{cases}$$

where $l = 1 \ldots L$ is the index of the current iteration step and $\alpha$ is a constant value e.g., 0.493.

In the second iterative stage 314, the baseline estimation data $f_{d,l}(x_i)$ may be updated based on the previously calculated, updated auxiliary data $D_l(x_i)$, the baseline estimation data $f_{d,l-1}(x_i)$ from the previous iteration step and the penalty term $P(f_{d,l-1}(x_i))$ using the following formula:

$$f_{d,l}(x_i) = \underset{f_d}{\arg\min}\left[\left\|I_d(x_i) - f_{d,l-1}(x_i) + D_l(x_i)\right\|^2 + P\left(f_{d,l-1}(x_i)\right)\right]$$

Alternatively, the baseline estimation data $f_{d,l}(x_i)$ may be computed in the second iterative stage 314 using a convolution of a discrete Green's function $G(x_i)$ with the intermediate image data $I_d(x_i)$ and the updated auxiliary data $d_l(x_i)$ as follows:

$$f_{d,l}(x_i) = G(x_i) * \left(I_d(x_i) + d_l(x_i)\right)$$

Without loss of generality, the Green's function $G(x_i)$ may have the following form for the one-dimensional case:

$$G(x_i) = F^{-1}\left[\frac{1}{1 - r \cdot F\left[\frac{\partial P(f_d(x_i))}{\partial f_d(x_i)}\right]}\right]$$

where $F[\ldots]$ is the discrete Fourier transform, $F^{-1}[\ldots]$ is the inverse discrete Fourier transform, r is the regularization parameter, and $\frac{\partial}{\partial}$ the functional derivative. In a multidimensional case, the regularization parameter may be different for each dimension: r = $r_j$.

As a starting point, an initial set of baseline estimation data (e.g. $f_{d,l=1}(x_i) = I_d(x_i)$) and an initial set of auxiliary data (e.g. $D_{l=1}(x_i) = 0$) can be defined.

Optionally, the step 156 of upsampling the computed baseline estimate 102 by a predetermined upsampling factor 158 may follow and result in an upsampled baseline estimate 160. In particular, upsampled baseline estimation data $f_u(X_i)$ may be computed from the baseline estimation data $f_d(x_i)$ by means of a nearest-neighbor interpolation, a linear interpolation, a bilinear interpolation, a Lanczos interpolation, AI-based interpolation algorithms or other types of upsampling techniques.

Preferably, the number of baseline estimate locations is increased to the number of input image locations M during upsampling. In other words, the upsampling factor 158 is complementary to the downsampling factor 108. Thus, a full-size baseline estimate 160 can be obtained without actually having to compute any baseline estimate from the full-size digital input image 104.

Depending on the application, the baseline estimation data $f_d(x_i)$ or the upsampled baseline estimation data $f_u(X_i)$ may be outputted as output image data 206 of a digital output image 110 in a subsequent step 208. The output image data 206 may be represented by a discrete array $O(x_i)$ or $O(X_i)$ of discrete values:

$$O(x_i) = f_d(x_i) \text{ or } O(X_i) = f_u(X_i)$$

Alternatively, the upsampled baseline estimate 160 may be removed from the digital input image 104 in an optional step 210 before the step 208. In particular, the upsampled baseline estimation data $f_u(X_i)$ are subtracted from the input image data $I(X_i)$ in order to obtain the output image data $O(X_i)$:

$$O(X_i) = I(X_i) - f_u(X_i)$$

This step is based on the above-mentioned assumption that the intensity and/or color changes across the digital input image 104 can be separated additively into the high spatial frequency in-focus component $I_1(X_i)$ and the low spatial frequency out-of-focus-component $I_2(X_i)$ according to the following equation:

$$I(X_i) = I_1(X_i) + I_2(X_i)$$

By subtracting the upsampled baseline estimation data $f_u(X_i)$ from the input image data $I(X_i)$, the in-focus component $I_1(X_i)$ is maintained in the output image data $O(X_i)$, while the out-of-focus-component $I_2(X_i)$ represented by the upsampled baseline estimation data $f_u(X_i)$ is removed. This yields an enhanced digital output image 110, in which the amount of blurred background is reduced, as is illustrated in Fig. 7.

The digital image processing apparatus 100 may comprise an image output section 162, which may comprise standardized connection means 164, such as standardized data exchange protocols, hardware connectors and/or wireless connections, each configured to output the output image data $O(x_i)$ or $O(x_i)$ to a display 166 of the computer 130 or to binoculars 180 of the microscope 120. The output image data $O(x_i)$ have preferably the same dimensionality as the intermediate image data $I_d(x_i)$, while the output image data $O(x_i)$ have preferably the same dimensionality as the input image data $I(X_i)$.

In Figs. 4 to 7, several intensity distributions 400 in the input image data $I(X_i)$, the intermediate image data $I_d(x_i)$, the baseline estimation data $f_d(x_i)$, the upsampled baseline estimation data $f_u(X_i)$ and the output image data $O(x_i)$ are shown. These may be taken along a line in the digital input image 104, the digital intermediate image 106, the baseline estimate 102, the upsampled baseline estimate 160 and the digital output image 110, respectively.

In frames A and B of Fig. 4, the input and output of step 122 is illustrated, respectively. In order to symbolize the effect of the downsampling, the intensity distribution curve of the intermediate image data $I_d(x_i)$ appears pixelated compared to the intensity distribution curve of the input image data $I(X_i)$. The actual downsampling, however, does not necessarily have to lead to such a visible pixelation. In fact, it is preferable to limit the downsampling factor $d_i$ to a maximum downsampling factor $d_{max,i}$ based on the predetermined feature size. For [example, the maximum downsampling factor $d_{max,i}$ may be less than the square root of the predetermined feature scale y or less than the predetermined feature length $\lambda_i$:

$$d_{max,i} < \sqrt{\gamma_i} = \lambda_i$$

Preferably, the maximum downsampling factor $d_{max}$ is less than or equal to one fourth of the predetermined feature length $\lambda$. Alternatively, the maximum downsampling factor $d_{max}$ is not larger than one fourth of the square root of the predetermined feature scale y.

$$d_{max,i} \leq \frac{\sqrt{\gamma_i}}{4} = \frac{\lambda_i}{4}[WK1]$$

Thus, for a typical range of the feature scale $\gamma_i$ between 100 and 400 pixels, the maximum downsampling factor $d_{max,i}$ is given by 2.5 to 5.

In frame C of Fig. 4, the input and output of step 124 are shown together. The input and output of step 156 are respectively illustrated in frames D and E of Fig. 4 with continuous lines.

Frame F in Fig. 4 illustrates the situation, if comparative baseline estimation data $f_c(X_i)$ of a comparative baseline estimate 402 were to be computed directly from the input image data $I(X_i)$. The inventive concept circumvents this computationally elaborate step by taking the route illustrated in frames A to E of Fig. 4. In other words, the inventive concept allows to obtain a full-size baseline estimate 160 without having to compute any baseline estimate from the full-size digital input image 104. This is also apparent in frame E of Fig. 4, where the upsampled baseline estimation data $f_u(X_i)$ are compared to the comparative baseline estimation data $f_c(X_i)$,

Pairs 136 of different digital input images 104 and baseline estimates 102 may be created, wherein each baseline estimate 102 of a pair 136 is computed from the digital input image 104 of said pair 136 using at least one of a) the inventive method and b) the inventive apparatus 100. A machine learning product 134 for processing a given digital input image 104 may then be trained by the pairs 136 of different digital input images 104 and baseline estimates 102, in order to arrive at a machine learning product 134 configured to compute the baseline estimate 102 of the given digital input image 104.

As used herein the term "and/or" includes any and all combinations of one or more of the associated listed items and may be abbreviated as "/".

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

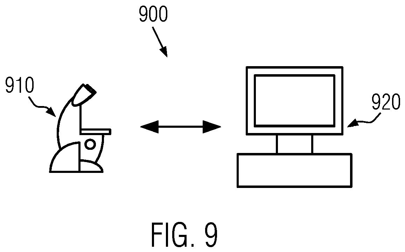

Some embodiments relate to a microscope comprising a system as described in connection with one or more of the Figs. 1 to 8. Alternatively, a microscope may be part of or connected to a system as described in connection with one or more of the Figs. 1 to 8. Fig. 9 shows a schematic illustration of a system 900 configured to perform a method described herein. The system 900 comprises a microscope 920 and a computer system 930. The microscope 920 is configured to take images and is connected to the computer system 930. The computer system 930 is configured to execute at least a part of a method described herein. The computer system 930 may be configured to execute a machine learning algorithm. The computer system 930 and microscope 920 may be separate entities but can also be integrated together in one common housing. The computer system 930 may be part of a central processing system of the microscope 920 and/or the computer system 930 may be part of a subcomponent of the microscope 920, such as a sensor, an actor, a camera or an illumination unit, etc. of the microscope 920.

The computer system 930 may be a local computer device (e.g. personal computer, laptop, tablet computer or mobile phone) with one or more processors and one or more storage devices or may be a distributed computer system (e.g. a cloud computing system with one or more processors and one or more storage devices distributed at various locations, for example, at a local client and/or one or more remote server farms and/or data centers). The computer system 930 may comprise any circuit or combination of circuits. In one embodiment, the computer system 930 may include one or more processors which can be of any type. As used herein, processor may mean any type of computational circuit, such as but not limited to a microprocessor, a microcontroller, a complex instruction set computing (CISC) microprocessor, a reduced instruction set computing (RISC) microprocessor, a very long instruction word (VLIW) micro-processor, a graphics processor, a digital signal processor (DSP), multiple core processor, a field programmable gate array (FPGA), for example, of a microscope or a microscope component (e.g. camera) or any other type of processor or processing circuit. Other types of circuits that may be included in the computer system 930 may be a custom circuit, an application-specific integrated circuit (ASIC), or the like, such as, for example, one or more circuits (such as a communication circuit) for use in wireless devices like mobile telephones, tablet computers, laptop computers, two-way radios, and similar electronic systems. The computer system 930 may include one or more storage devices, which may include one or more memory elements suitable to the particular application, such as a main memory in the form of random access memory (RAM), one or more hard drives, and/or one or more drives that handle removable media such as compact disks (CD), flash memory cards, digital video disk (DVD), and the like. The computer system 930 may also include a display device, one or more speakers, and a keyboard and/or controller, which can include a mouse, trackball, touch screen, voice-recognition device, or any other device that permits a system user to input information into and receive information from the computer system 930.

Some or all of the method steps may be executed by (or using) a hardware apparatus, like for example, a processor, a microprocessor, a programmable computer or an electronic circuit. In some embodiments, some one or more of the most important method steps may be executed by such an apparatus.

Depending on certain implementation requirements, embodiments of the invention can be implemented in hardware or in software. The implementation can be performed using a non-transitory storage medium such as a digital storage medium, for example a floppy disc, a DVD, a Blu-Ray, a CD, a ROM, a PROM, and EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments according to the invention comprise a data carrier having electronically readable control signals, which are capable of cooperating with a programmable computer system, such that one of the methods described herein is performed.

Generally, embodiments of the present invention can be implemented as a computer program product with a program code, the program code being operative for performing one of the methods when the computer program product runs on a computer. The program code may, for example, be stored on a machine readable carrier.

Other embodiments comprise the computer program for performing one of the methods described herein, stored on a machine readable carrier.

In other words, an embodiment of the present invention is, therefore, a computer program having a program code for performing one of the methods described herein, when the computer program runs on a computer.

A further embodiment of the present invention is, therefore, a storage medium (or a data carrier, or a computer-readable medium) comprising, stored thereon, the computer program for performing one of the methods described herein when it is performed by a processor. The data carrier, the digital storage medium or the recorded medium are typically tangible and/or non-transitionary. A further embodiment of the present invention is an apparatus as described herein comprising a processor and the storage medium.

A further embodiment of the invention is, therefore, a data stream or a sequence of signals representing the computer program for performing one of the methods described herein. The data stream or the sequence of signals may, for example, be configured to be transferred via a data communication connection, for example, via the internet.

A further embodiment comprises a processing means, for example, a computer or a programmable logic device, configured to, or adapted to, perform one of the methods described herein.

A further embodiment comprises a computer having installed thereon the computer program for performing one of the methods described herein.

A further embodiment according to the invention comprises an apparatus or a system configured to transfer (for example, electronically or optically) a computer program for performing one of the methods described herein to a receiver. The receiver may, for example, be a computer, a mobile device, a memory device or the like. The apparatus or system may, for example, comprise a file server for transferring the computer program to the receiver.

In some embodiments, a programmable logic device (for example, a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

Embodiments may be based on using a machine-learning model or machine-learning algorithm. Machine learning may refer to algorithms and statistical models that computer systems may use to perform a specific task without using explicit instructions, instead relying on models and inference. For example, in machine-learning, instead of a rule-based transformation of data, a transformation of data may be used, that is inferred from an analysis of historical and/or training data. For example, the content of images may be analyzed using a machine-learning model or using a machine-learning algorithm. In order for the machine-learning model to analyze the content of an image, the machine-learning model may be trained using training images as input and training content information as output. By training the machine-learning model with a large number of training images and/or training sequences (e.g. words or sentences) and associated training content information (e.g. labels or annotations), the machine-learning model "learns" to recognize the content of the images, so the content of images that are not included in the training data can be recognized using the machine-learning model. The same principle may be used for other kinds of sensor data as well: By training a machine-learning model using training sensor data and a desired output, the machine-learning model "learns" a transformation between the sensor data and the output, which can be used to provide an output based on non-training sensor data provided to the machine-learning model. The provided data (e.g. sensor data, meta data and/or image data) may be preprocessed to obtain a feature vector, which is used as input to the machine-learning model.

Machine-learning models may be trained using training input data. The examples specified above use a training method called "supervised learning". In supervised learning, the machine-learning model is trained using a plurality of training samples, wherein each sample may comprise a plurality of input data values, and a plurality of desired output values, i.e. each training sample is associated with a desired output value. By specifying both training samples and desired output values, the machine-learning model "learns" which output value to provide based on an input sample that is similar to the samples provided during the training. Apart from supervised learning, semi-supervised learning may be used. In semi-supervised learning, some of the training samples lack a corresponding desired output value. Supervised learning may be based on a supervised learning algorithm (e.g. a classification algorithm, a regression algorithm or a similarity learning algorithm. Classification algorithms may be used when the outputs are restricted to a limited set of values (categorical variables), i.e. the input is classified to one of the limited set of values. Regression algorithms may be used when the outputs may have any numerical value (within a range). Similarity learning algorithms may be similar to both classification and regression algorithms but are based on learning from examples using a similarity function that measures how similar or related two objects are. Apart from supervised or semi-supervised learning, unsupervised learning may be used to train the machine-learning model. In unsupervised learning, (only) input data might be supplied and an unsupervised learning algorithm may be used to find structure in the input data (e.g. by grouping or clustering the input data, finding commonalities in the data). Clustering is the assignment of input data comprising a plurality of input values into subsets (clusters) so that input values within the same cluster are similar according to one or more (pre-defined) similarity criteria, while being dissimilar to input values that are included in other clusters.

Reinforcement learning is a third group of machine-learning algorithms. In other words, reinforcement learning may be used to train the machine-learning model. In reinforcement learning, one or more software actors (called "software agents") are trained to take actions in an environment. Based on the taken actions, a reward is calculated. Reinforcement learning is based on training the one or more software agents to choose the actions such, that the cumulative reward is increased, leading to software agents that become better at the task they are given (as evidenced by increasing rewards).

Furthermore, some techniques may be applied to some of the machine-learning algorithms. For example, feature learning may be used. In other words, the machine-learning model may at least partially be trained using feature learning, and/or the machine-learning algorithm may comprise a feature learning component. Feature learning algorithms, which may be called representation learning algorithms, may preserve the information in their input but also transform it in a way that makes it useful, often as a pre-processing step before performing classification or predictions. Feature learning may be based on principal components analysis or cluster analysis, for example.

In some examples, anomaly detection (i.e. outlier detection) may be used, which is aimed at providing an identification of input values that raise suspicions by differing significantly from the majority of input or training data. In other words, the machine-learning model may at least partially be trained using anomaly detection, and/or the machine-learning algorithm may comprise an anomaly detection component.

In some examples, the machine-learning algorithm may use a decision tree as a predictive model. In other words, the machine-learning model may be based on a decision tree. In a decision tree, observations about an item (e.g. a set of input values) may be represented by the branches of the decision tree, and an output value corresponding to the item may be represented by the leaves of the decision tree. Decision trees may support both discrete values and continuous values as output values. If discrete values are used, the decision tree may be denoted a classification tree, if continuous values are used, the decision tree may be denoted a regression tree.

Association rules are a further technique that may be used in machine-learning algorithms. In other words, the machine-learning model may be based on one or more association rules. Association rules are created by identifying relationships between variables in large amounts of data. The machine-learning algorithm may identify and/or utilize one or more relational rules that represent the knowledge that is derived from the data. The rules may e.g. be used to store, manipulate or apply the knowledge.

Machine-learning algorithms are usually based on a machine-learning model. In other words, the term "machine-learning algorithm" may denote a set of instructions that may be used to create, train or use a machine-learning model. The term "machine-learning model" may denote a data structure and/or set of rules that represents the learned knowledge (e.g. based on the training performed by the machine-learning algorithm). In embodiments, the usage of a machine-learning algorithm may imply the usage of an underlying machine-learning model (or of a plurality of underlying machine-learning models). The usage of a machine-learning model may imply that the machine-learning model and/or the data structure/set of rules that is the machine-learning model is trained by a machine-learning algorithm.

For example, the machine-learning model may be an artificial neural network (ANN). ANNs are systems that are inspired by biological neural networks, such as can be found in a retina or a brain. ANNs comprise a plurality of interconnected nodes and a plurality of connections, so-called edges, between the nodes. There are usually three types of nodes, input nodes that receiving input values, hidden nodes that are (only) connected to other nodes, and output nodes that provide output values. Each node may represent an artificial neuron. Each edge may transmit information, from one node to another. The output of a node may be defined as a (non-linear) function of its inputs (e.g. of the sum of its inputs). The inputs of a node may be used in the function based on a "weight" of the edge or of the node that provides the input. The weight of nodes and/or of edges may be adjusted in the learning process. In other words, the training of an artificial neural network may comprise adjusting the weights of the nodes and/or edges of the artificial neural network, i.e. to achieve a desired output for a given input.

Alternatively, the machine-learning model may be a support vector machine, a random forest model or a gradient boosting model. Support vector machines (i.e. support vector networks) are supervised learning models with associated learning algorithms that may be used to analyze data (e.g. in classification or regression analysis). Support vector machines may be trained by providing an input with a plurality of training input values that belong to one of two categories. The support vector machine may be trained to assign a new input value to one of the two categories. Alternatively, the machine-learning model may be a Bayesian network, which is a probabilistic directed acyclic graphical model. A Bayesian network may represent a set of random variables and their conditional dependencies using a directed acyclic graph. Alternatively, the machine-learning model may be based on a genetic algorithm, which is a search algorithm and heuristic technique that mimics the process of natural selection.

REFERENCE SIGNS

| | |
|---|---|
| 100 | Digital image processing apparatus |
| 102 | baseline estimate |
| 104 | digital input image |
| 106 | digital intermediate image |
| 108 | downsampling factor d |
| 110 | digital output image |
| 112 | predetermined feature length $\lambda$ |
| 114 | image feature |
| 116 | adapted feature length $\lambda_d$ |
| 118 | embedded processor |

| | |
|---|---|
| 120 | microscope |
| 122 | step |
| 124 | step |
| 126 | computer-program product |
| 128 | program code |
| 130 | computer |
| 132 | computer-readable medium |
| 134 | machine learning product |
| 136 | pair of digital input image and baseline estimate |
| 138 | image-forming section |
| 140 | camera |
| 142 | channel |
| 144 | object |
| 146 | fluorophore |
| 148 | illumination |
| 150 | lens |
| 152 | image storage section |
| 154 | workstation |
| 156 | step |
| 158 | upsampling factor |
| 160 | upsampled baseline estimate |
| 162 | image output section |
| 164 | standardized connection means |
| 166 | display |
| 168 | in-focus components $I_1(X_i)$ |
| 170 | out-of-focus components $I_2(X_i)$ |
| 172 | in-focus components $I_{d,1}(x_i)$ |
| 174 | out-of-focus components $I_{d,2}(x_i)$ |
| 176 | external user input |
| 178 | image input section |
| 180 | binoculars |
| 182 | CPU |
| 184 | GPU |
| 185 | object slide |
| 200 | input image data $I(X_i)$ |
| 202 | intermediate image data $I_d(x_i)$ |
| 204 | baseline estimation data $f_d(x_i)$ |
| 206 | output image data $O(x_i)$ or $O(x_i)$ |
| 208 | step |
| 210 | step |
| 300 | step |
| 302 | step |
| 304 | step |
| 306 | downsampling and filtering step |
| 308 | step |
| 310 | step |
| 312 | iterative stage |
| 314 | iterative stage |
| 316 | convergence criterion |
| 318 | iterative half-quadratic minimization scheme |
| 400 | intensity distribution |
| 402 | comparative baseline estimate |
| m | number of intermediate image locations |
| M | number of input image locations |
| $M_i$ | least-square minimization criterion |
| P | penalty term |
| C | cost function |
| $r, r_i$ | regularization parameter |

| $\gamma, \gamma_i$ | predetermined feature scale |
| $\gamma_d, \gamma_{d,i}$ | adapted feature scale |
| $s$ | predetermined threshold value |
| $s_d$ | adapted threshold value |
| $\varphi$ | truncated quadratic term |
| c | predetermined convergence threshold |
| $D_l$ | auxiliary data |
| G | Green's function |
| $d, d_i$ | downsampling factor |
| $d_{max}, d_{max,i}$ | maximum downsampling factor |
| $f_c$ | comparative baseline estimation data |
| $f_u$ | upsampled baseline estimation data |

**Claims**

1.  Digital image processing apparatus (100) for computing a baseline estimate (102) of a digital input image (104), wherein the digital image processing apparatus (100) is configured

    - to obtain a digital intermediate image (106) by downsampling the digital input image (104) by a predetermined downsampling factor (108) and
    - to compute the baseline estimate (102) based on the digital intermediate image (106).

2.  Digital image processing apparatus (100) according to claim 1, wherein the digital image processing apparatus (100) is configured to compute a digital output image (110) based on one of a) the baseline estimate (102) and b) the digital input image (104), from which the baseline estimate (102) has been removed.

3.  Digital image processing apparatus (100) according to claim 1 or 2, wherein the digital image processing apparatus (100) is configured to carry out the downsampling simultaneously to filtering the digital input image (104).

4.  Digital image processing apparatus (100) according to any one of claims 1 to 3, wherein the digital image processing apparatus (100) is configured to compute the baseline estimate (102) using an iterative half-quadratic minimization scheme.

5.  Digital image processing apparatus (100) according to any one of claims 1 to 4, wherein the digital image processing apparatus (100) is configured to obtain a predetermined feature length (112), the predetermined feature length (112) being representative of image features (114) contained in the digital input image (104), wherein the digital image processing apparatus (100) is further configured to compute an adapted feature length (116) based on the predetermined feature length (112) and the downsampling factor (108), and wherein the digital image processing apparatus (100) is configured to compute the baseline estimate (102) based on the adapted feature length (116).

6.  Digital image processing apparatus (100) according to claim 4, wherein the predetermined downsampling factor (108) is less than the predetermined feature length (112).

7.  Digital image processing apparatus (100) according to any one of claims 1 to 6, wherein the digital image processing apparatus (100) is an embedded processor (118).

8.  Microscope (120) comprising an embedded processor (118), the embedded processor (118) comprising a digital image processing apparatus (100) according to any one of claims 1 to 7.

9.  Computer-implemented image processing method for computing a baseline estimate (102) of a digital input image (104), wherein the method comprises the steps of

    - downsampling (122) the digital input image (104) by a predetermined downsampling factor (108) to obtain a digital intermediate image (106) and
    - computing (124) the baseline estimate (102) based on the digital intermediate image (106).

10. Method according to claim 9 being adapted to operate a digital image processing apparatus (100) according to any one of claims 1 to 7.

11. Method according to claim 9 or 10, wherein the method is executed on an embedded processor (118) of a microscope (120).

12. Computer-program product (126) comprising a program code (128) which, when executed by a computer (130), causes the computer (130) to carry out the method according to claim 9.

13. Computer-readable medium (132) comprising a program code (128) which, when executed by a computer (130), causes the computer (130) to carry out the method according to claim 9.

14. Machine learning product (134) for processing a digital input image (104), the machine learning product (134) being configured to compute a baseline estimate (102) of the digital input image (104), the machine learning product (134) having been trained by pairs (136) of different digital input images (104) and baseline estimates (102), each baseline estimate (102) of a pair (136) computed from the digital input image (104) of the pair (136) using at least one of a) the method according to claim 9 and b) the digital image processing apparatus (100) according to any one of claims 1 to 7.

15. Method of training a machine learning product (134) by pairs (136) of different digital input images (104) and baseline estimates (102), each baseline estimate (102) of a pair (136) computed from the digital input image (104) of the pair (136) using at least one of a) the method according to claim 9 and b) the digital image processing apparatus (100) according to any one of claims 1 to 7.

FIG. 1

FIG. 3

FIG. 2

FIG. 4

EP 4 216 161 A1

FIG. 5

FIG. 6

FIG. 7

EP 4 216 161 A1

FIG. 8

900

910

920

FIG. 9

Europäisches
Patentamt

European
Patent Office

Office européen
des brevets

# EUROPEAN SEARCH REPORT

Application Number

EP 22 15 3009

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/164010 A1 (MA JIYONG [US] ET AL) 30 May 2019 (2019-05-30) | 1-4,7-15 | INV. G06T7/194 |
| A | * [0002,0142,143,147,148] * | 5,6 | |
| X | CN 111 627 038 A (HANGZHOU WANGDAO HOLDING CO LTD) 4 September 2020 (2020-09-04) * [0002,7,12] * | 1,3,4, 7-15 | |
| X | JP 4 093413 B2 (RICOH KK) 4 June 2008 (2008-06-04) * [0001,17,25] * | 1,3,4, 7-15 | |
| X | US 2006/110021 A1 (LUO HUI [US] ET AL) 25 May 2006 (2006-05-25) * [0011,12,13,30,32] * | 1-4,7-15 | |

TECHNICAL FIELDS
SEARCHED      (IPC)

G06T

The present search report has been drawn up for all claims

| Place of search | Date of completion of the search | Examiner |
|---|---|---|
| Munich | 30 June 2022 | Nicolau, Stephane |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
.......................................................................
& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 22 15 3009

This annex lists the patent family members relating to the patent documents cited in the above-mentioned European search report.
The members are as contained in the European Patent Office EDP file on
The European Patent Office is in no way liable for these particulars which are merely given for the purpose of information.

30-06-2022

| Patent document cited in search report | | Publication date | Patent family member(s) | | Publication date |
|---|---|---|---|---|---|
| US 2019164010 | A1 | 30-05-2019 | US 2019164010 A1 | | 30-05-2019 |
| | | | US 2019164313 A1 | | 30-05-2019 |
| | | | US 2020394452 A1 | | 17-12-2020 |
| | | | US 2020394453 A1 | | 17-12-2020 |
| | | | US 2021383163 A1 | | 09-12-2021 |
| CN 111627038 | A | 04-09-2020 | NONE | | |
| JP 4093413 | B2 | 04-06-2008 | JP 4093413 B2 | | 04-06-2008 |
| | | | JP 2004336282 A | | 25-11-2004 |
| US 2006110021 | A1 | 25-05-2006 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **IDIER, J.** Convex Half-Quadratic Criteria and Interacting Variables for Image Restoration. *IEEE Transactions on Image Processing,* 2001, vol. 10 (7), 1001-1009
- **MAZET, V. ; CARTERET, C. ; BIRE, D ; IDIER, J. ; HUMBERT, B.** Background Removal from Spectra by Designing and Minimizing a Non-Quadratic Cost Function. *Chemometrics and Intelligent Laboratory Systems,* 2005, vol. 76, 121-133
- **KOHO, SAMI ; TORTAROLO, GIORGIO ; CASTELLO, MARCO ; DEGUCHI, TAKAHIRO ; DIASPRO, ALBERTO ; VICIDOMINI, GIUSEPPE.** *Fourier Ring Correlation Simplifies Image Restoration in Fluorescence Microscopy,* 2019, https://www.nature.com/articles/s41467-019-11024-z